Europäisches Patentamt

(19) European Patent Office

Office européen des brevets

(11) Numéro de publication : **0 071 537**
**B1**

(12) **FASCICULE DE BREVET EUROPÉEN**

(45) Date de publication du fascicule du brevet :
03.04.85

(21) Numéro de dépôt : **82401419.5**

(22) Date de dépôt : **29.07.82**

(51) Int. Cl.⁴ : **B 21 F 33/00**, B 23 D 31/00

(54) **Machine à refendre un produit plat continu, tel qu'un treillis métallique soudé.**

(30) Priorité : **29.07.81 FR 8114705**

(43) Date de publication de la demande :
**09.02.83 Bulletin 83/06**

(45) Mention de la délivrance du brevet :
**03.04.85 Bulletin 85/14**

(84) Etats contractants désignés :
**AT BE CH DE GB IT LI LU NL SE**

(56) Documents cités :
**DE-B- 1 201 658**
**DE-C- 727 966**
**DE-C- 973 571**
**FR-A- 2 103 090**
**US-A- 1 447 736**
**US-A- 2 110 776**

(73) Titulaire : **Etablissements A. Mure S.A.; Société dite:**
**57 cours Albert Thomas**
**F-69424 Lyon Cedex 3 (FR)**

**KRIS-FRANCE**
**57 Avenue du Général Leclerc**
**F-95480 Pierrelaye (FR)**

(72) Inventeur : **Pons, Jean**
**38, avenue des Minimes**
**F-94300 Vincennes (FR)**

(74) Mandataire : **Rodhain, Claude**
**Cabinet Claude RODHAIN 30, rue La Boétie**
**F-75008 Paris (FR)**

Jouve, 18, rue St-Denis, 75001 Paris, France

## Description

La présente invention concerne une machine à refendre des treillis métalliques plats continus soudés à larges mailles, notamment d'armature de béton, en plusieurs bandes juxtaposées dans le sens transversal, du type comprenant un bâti de support sur lequel est monté au moins un mécanisme de refendage comprenant deux parties disposées en regard l'une de l'autre de part et d'autre d'un plan dans lequel se déplace le produit à couper et comportant deux paires de lames de coupe orientées suivant la direction de déplacement du produit, perpendiculairement audit plan et décalées l'une par rapport à l'autre suivant ladite direction, les lames de chaque paire étant animées d'un mouvement relatif de rapprochement et d'éloignement sous l'action de moyens d'entraînement amenant les lames en position de cisaillement.

On connaît déjà des machines de ce type, dans lesquelles chaque mécanisme de refendage, destiné à séparer deux des bandes transversales, comprend une paire de lames de coupe unique, disposées une sur chaque partie du mécanisme.

On a par exemple décrit dans FR-A-2 103 090 une cisaille comportant deux dispositifs de coupe ayant chacun une paire de lames dont l'une allongée rectiligne fixe et l'autre courbe, chaque dispositif étant monté dans une culasse en forme de C et les deux culasses étant montées réglables l'une par rapport à l'autre, face à face en sens opposé. Une paire de lames est montée dans le sens de défilement de la tôle à couper, sur chaque dispositif, avec une autre paire de lames transversales.

DE-C-973 571 décrit une machine destinée à découper des grillages souples au moyen d'organes de coupe constitués par des molettes montées en plusieurs bancs séparés et dans laquelle l'espacement entre deux molettes est fixe pour un outillage donné.

Toutefois, ces machines connues présentent divers inconvénients. Dans le cas du refendage de produits à mailles, au moins l'une des deux bandes obtenues, si ce n'est les deux, présentent des éléments en saillie, ce qui est souvent peu souhaitable. Dans le cas du refendage de produits pleins, les bandes obtenues présentent en général un bord déformé, ce qui exige une opération de redressage ultérieur peu avantageuse.

C'est pourquoi la présente invention a pour but de supprimer, entre autres, ces inconvénients, et à cet effet elle a pour objet une machine du type précité, caractérisée en ce qu'elle comprend plusieurs mécanismes de refendage montés réglables les uns par rapport aux autres en coulissant dans un bâti rectiligne, dans le sens transversal du treillis à refendre, chaque paire de lames de chaque mécanisme comportant une lame fixe et une lame mobile, les dites lames fixes étant alignées au droit l'une de l'autre tandis que lesdites lames mobiles sont décalées l'une par rapport à l'autre d'une part d'une distance dans la direction de la coupe et d'autre part d'une distance suivant la direction de déplacement du treillis à couper, le décalage, ou espacement, des lames de chaque paire, transversalement à la direction de déplacement du treillis étant égal à la largeur d'une maille de celui-ci.

Avantageusement, la valeur du décalage suivant la direction de coupe peut être de l'ordre de grandeur de l'épaisseur du produit à refendre. Grâce à ce ou ces décalages, on peut, d'une part, diminuer l'effort de coupe à fournir et les chocs, étant donné que les deux coupes effectuées sont décalées dans le temps et, d'autre part, interdire le coincement entre les lames de la ou des chutes de produit qui se trouvent séparées des deux bandes transversales de produit obtenues.

Dans un mode de réalisation particulier de l'invention, dans le cas où les moyens d'entraînement comprennent un coulisseau qui porte une lame de coupe et qui est monté coulissant suivant un mouvement de va-et-vient suivant la direction de coupe, en étant solidaire d'un entraînement excentrique commandé en rotation par un moteur, il peut être prévu que ce coulisseau présente des moyens de fixation de deux lames de coupe dans des plans parallèles, décalés suivant au moins l'une des deux directions constituées par la direction de coupe et la direction des arêtes de coupe. Avantageusement, les moyens de fixation décalés peuvent être constitués par des faces de butée des lames, décalées suivant la direction de coupe et par des organes de fixation transversale des lames sur une nervure centrale du coulisseau décalés suivant la direction des arêtes de coupe.

De manière particulière également, il peut être prévu, dans le cas où le coulisseau est monté dans un flasque de guidage, que ce flasque de guidage soit disposé, de manière amovible et interchangeable, entre deux flasques latéraux de maintien. Cette disposition permet de remplacer le coulisseau par un coulisseau d'épaisseur différente pour régler à une valeur différente l'écartement transversal entre des lames de coupe lorsque l'on doit travailler sur un produit dont la chute doit présenter une largeur différente, par exemple pour un treillis à mailles de largeur différente. Bien entendu, dans le cas où une seule lame de chaque paire est mobile et où l'autre lame est montée sur une partie fixe du bâti, une pièce entretoise également amovible et interchangeable est disposée entre les deux parties fixes qui portent les lames fixes.

Enfin, dans la double situation décrite ci-dessus, il peut avantageusement être prévu que le coulisseau et l'entretoise présentent sensiblement la même épaisseur transversale, tandis que les parties fixes porte-lames sont disposées en regard des flasques latéraux de maintien, les lames mobiles et les lames fixes étant montées dans des logements en retrait, dans le sens transversal, respectivement du coulisseau et des parties fixes porte-lames.

D'autres caractéristiques et avantages de l'invention ressortiront de la description qui va suivre, à titre d'exemple non limitatif, et en regard des dessins annexés sur lesquels :

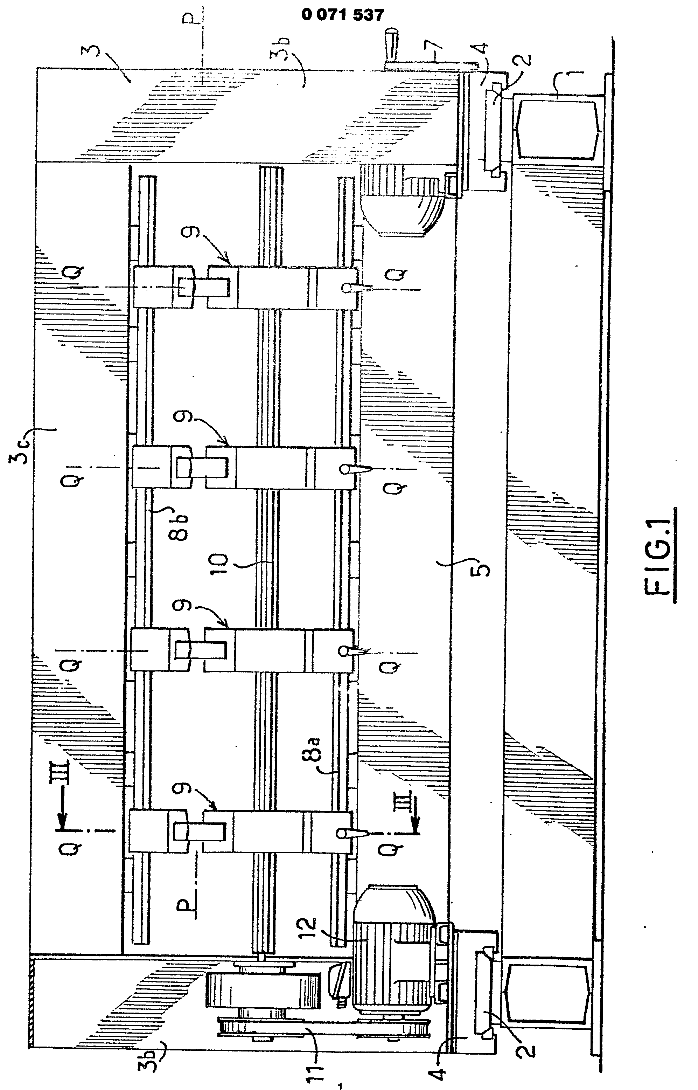

la figure 1 représente une vue en élévation d'une machine à refendre, suivant un mode de réalisation particulier conforme à l'invention ;

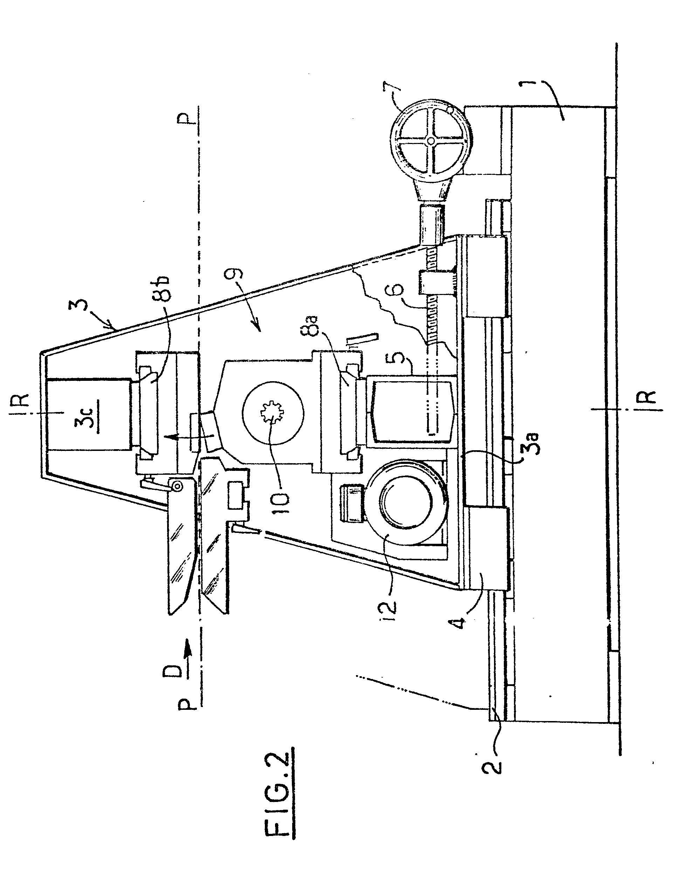

la figure 2 représente une vue de droite de cette machine ;

la figure 3 représente une vue partielle de la machine, constituée par une coupe de l'un de ses mécanismes de refendage, prise suivant la ligne III-III des Fig. 1 et 4 ;

la figure 4 représente une vue de face de ce même mécanisme de refendage, prise suivant la ligne IV-IV de la Fig. 3.

La machine représentée comprend un socle rectangulaire 1 représentant, sur sa face supérieure et le long de ses deux petits côtés, deux glissières 2. Sur ces glissières se déplace un bâti mobile 3 ayant sensiblement la même longueur que le socle 1 et ayant une section transversale de forme trapézoïdale dont la grande base est plus courte que le petit côté du socle 1. La face inférieure de ce bâti 3 porte sur ses deux petits côtés des sabots à section en U renversé 4 qui sont montés coulissant sur les glissières 2 et peuvent être immobilisés sur celles-ci à l'aide de lardons auxquels sont associés des leviers de blocage réglables à vis.

Sur le fond 3a du bâti 3 se trouve disposé en son milieu et suivant la longueur de la machine, un support 5 en poutrelles avec lequel coopère d'ailleurs l'extrémité d'une vis horizontale 6 d'entraînement en translation du bâti suivant la largeur de la machine, à l'aide d'un volant de commande 7. Le bâti 3 est ouvert sur ses grands côtés, et n'est complété avec le fond 3a que par des carters latéraux 3b qui enferment les mécanismes d'entraînement et un support longitudinal supérieur 3c s'étendant sur toute la longueur de la machine.

Le support inférieur 5 et le support supérieur 3c portent, sur toute leur longueur s'étendant entre les carters 3b et respectivement sur sa face supérieure pour le support 5 et sur sa face inférieure pour le support 3c, des glissières planes horizontales 8a et 8b.

Si l'on considère le plan horizontal P-P suivant lequel se trouve amené le produit à refendre, les glissières 8a et 8b reçoivent plusieurs mécanismes de refendage 9, ici au nombre de quatre, dont les plans moyens sont disposés suivant des plans verticaux Q-Q orientés suivant la direction D d'amenée du produit à refendre dans le plan P-P et qui sont régulièrement répartis sur la longueur desdites glissières.

Entre ces glissières, et s'étendant également entre les deux carters 3b, se trouve disposé un arbre cannelé horizontal 10 disposé suivant le plan vertical longitudinal R-R de symétrie du bâti 3 et plus particulièrement des glissières 8a et 8b. Cet arbre cannelé 10 est entraîné en rotation d'un mouvement continu et uniforme à l'aide d'une transmission 11 et d'un groupe motoréducteur 12, disposé dans l'un des carters 3b du bâti.

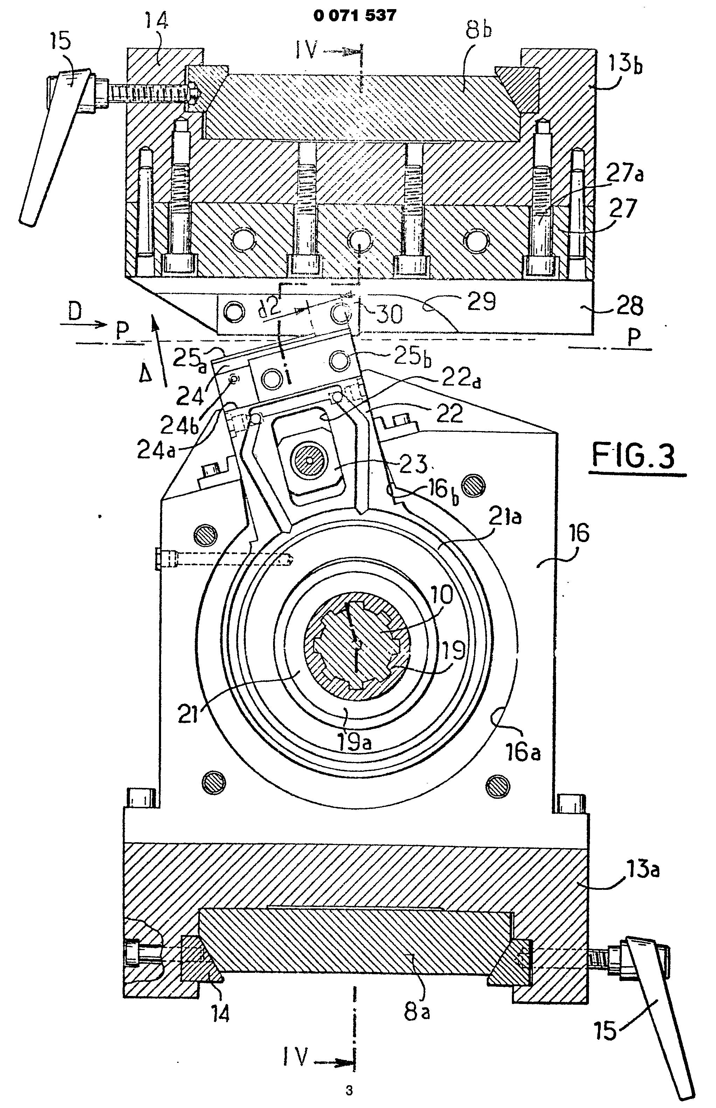

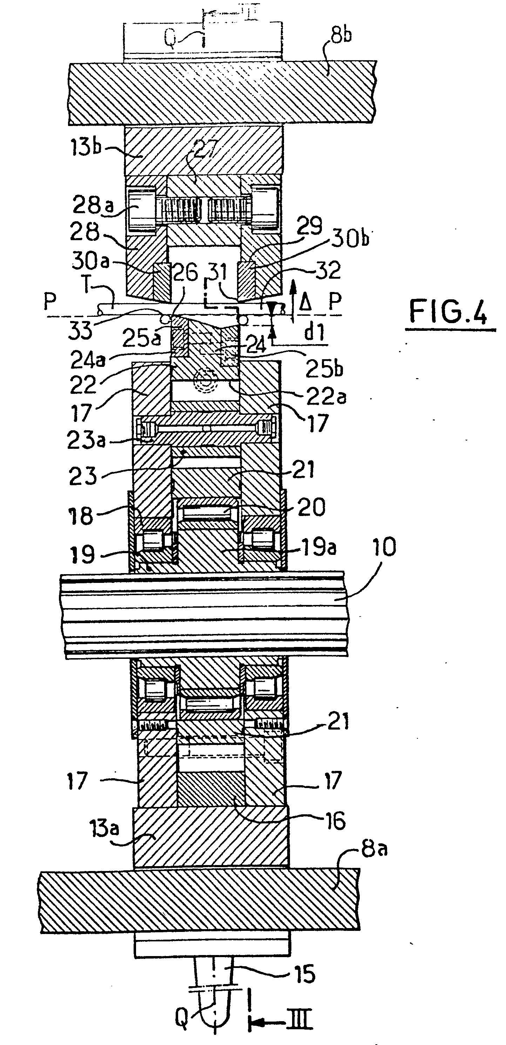

Comme le montrent les Fig. 3 et 4, chaque mécanisme de refendage 9 est monté sur deux sabots à section en U, 13a et 13b, qui sont montés coulissants respectivement sur les glissières 8a et 8b, et dont les deux ailes portent des lardons ou patins 14 qui, d'un côté des sabots, sont fixes tandis que de l'autre côté, ils sont montés mobiles en direction d'une tranche biseautée de la glissière correspondante, sous l'action d'une vis entraînée par un levier de blocage 15.

Sur la face supérieure plane, qui s'étend essentiellement suivant la direction D, du sabot inférieur 13a, se trouvent fixées trois plaques ou flasques qui sont juxtaposés entre eux et s'étendent l'un 16, ou flasque intermédiaire, sensiblement suivant le plan Q-Q moyen du mécanisme, et les deux autres 17, ou flasques latéraux, de part et d'autre de celui-ci, ces trois flasques s'étendant par ailleurs en hauteur approximativement jusqu'au voisinage du plan P-P. Les deux flasques latéraux 17 présentent, à l'endroit du passage de l'arbre cannelé 10, des ouvertures circulaires dans lesquelles sont montés des roulements à rouleaux 18, fixés intérieurement sur les deux extrémités d'un manchon 19 claveté sur l'arbre 10.

Dans sa partie centrale, ce manchon 19 présente la forme d'un disque circulaire 19a excentré par rapport la forme d'un disque circulaire 10a excentré par rapport à l'axe de l'arbre cannelé 10. Ce disque excentré 19a reçoit un roulement à aiguilles 20, qui est lui-même monté à l'intérieur d'une pièce annulaire 21 à section rectangulaire qui est montée mobile librement entre les deux flasques 17. Le diamètre de la pièce annulaire 21 est tel qu'elle peut se débattre librement à l'intérieur d'un logement également circulaire 16a, ménagé à l'intérieur du flasque intermédiaire 16, lorsque cette pièce annulaire se déplace sous l'effet de l'entraînement en rotation du disque excentré 19a par l'arbre 10.

La pièce annulaire 21 présente, venu de matière avec elle, un prolongement radial de grande dimension 22 qui présente perpendiculairement à sa direction radiale une section rectangulaire lui permettant de coulisser, d'une part, entre les flasques latéraux 17 et, d'autre part, dans un passage 16b par lequel le logement 16a du flasque intermédiaire s'ouvre vers le haut. La direction $\triangle$ de ce passage 16b et par conséquent du prolongement ou coulisseau 22 est légèrement inclinée par rapport à la verticale, à partir du centre de l'arbre 10, du côté par lequel le produit à refendre arrive (direction D), par exemple d'un angle de 15 à 20°.

Le coulisseau 22 présente une lumière transversale 22a, à section rectangulaire et dont deux des côtés peuvent glisser sur les flancs d'une pièce de guidage parallélépipédique 23 qui est fixée et serrée entre les flasques latéraux 17, à l'aide d'un axe 23a. Des canaux de graissage 21a sont prévus sur les deux faces de la pièce annulaire 21 suivant un circuit circulaire ainsi que sur les deux faces correspondantes du coulisseau, en entourant la lumière 22a.

Le coulisseau 22 se termine, du côté de son extrémité libre, par une nervure centrale 24 qui s'étend sur toute sa longueur (suivant le plan Q-Q) et qui est délimitée par deux épaulements ou surfaces de butée 24a ménageant des logements en retrait dans lesquels sont placées deux lames de coupe 25a et 25b.

Les deux surfaces de butée 24a, constituant le fond des logements qui reçoivent les lames, sont décalées l'une par rapport à l'autre dans le sens radial, c'est-à-dire en direction de l'arbre 10, d'une distance $d_1$ qui est approximativement de l'ordre de grandeur de l'épaisseur du produit à refendre, par exemple constitué par un treillis soudé T. Les lames de coupe sont des plaquettes parallélépipédiques ayant des faces qui affleurent les surfaces principales du coulisseau 22 et dont les arêtes 26 présentent bien entendu le même décalage que les surfaces de butée 24a. Ces lames présentent bien entendu des angles de dépouille suivant lesquels elles se raccordent à la face libre de la nervure 24.

Suivant la direction D d'amenée du produit à refendre T, les lames se trouvent également décalées d'une distance $d_2$, la lame la plus haute (en raison du premier décalage $d_1$) se trouvant située déplacée du côté amont par rapport à la direction d'amenée D. Pour permettre ce décalage $d_2$, il est prévu sur la nervure 24 des taraudages 24b décalés de la même valeur et permettant la fixation des lames de coupe par vis.

Comme le montrent également les Fig. 3 et 4 dans leur partie supérieure, la face inférieure plane du sabot supérieur 13b porte, par un jeu de vis 27a, une barre entretoise 27 ayant l'épaisseur du flasque intermédiaire inférieur 16, et s'étendant suivant la direction D, et de part et d'autre de laquelle sont fixées, par des vis 28a, des plaques allongées 28, de même épaisseur et longueur que les flasques latéraux inférieurs 17, mais de relativement faible hauteur. Ces plaques 28 présentent, sur leurs faces en regard, des logements en retrait 29 dans lesquels sont placées deux lames de coupe supérieures 30a et 30b, de même section que les lames inférieures mobiles 25a et 25b, et fixées à l'intérieur de ces logements, de manière que leurs faces intérieures en regard affleurent très exactement les faces extérieures des lames 25a et 25b, de manière à autoriser un cisaillement parfait par les paires respectives de lames 25a-30a et 25b-30b. Les deux lames fixes 30a et 30b et leurs logements sont disposés suivant le même niveau vertical.

Le fonctionnement de la machine ainsi décrite est le suivant :

Un treillis soudé T est amené en continu dans le plan P suivant la direction D, de manière à passer au-dessous des arêtes de coupe 31 des lames supérieures fixes 30a et 30b. Lors de chaque rotation de l'arbre cannelé 10 et du disque excentrique 19a, le coulisseau 22 est animé d'un mouvement alternatif de va-et-vient qui, pendant la course d'avance de ce coulisseau dans la direction △, amène successivement la lame mobile 25a à coopérer avec la lame 30a pour procéder à un premier cisaillement d'un fil transversal 32 du treillis, puis, avec un certain décalage dans le temps dû aux décalages de montage $d_1$ et $d_2$, la seconde lame mobile 25b à coopérer avec la lame fixe 30b pour procéder à un autre cisaillement du fil 32. Ces deux cisaillements sont effectués très précisément au ras de filants longitudinaux 33 du treillis, de sorte qu'aucune saillie des fils transversaux 32 ne subsiste après l'opération de coupe. Cette dernière s'effectue en continu au fur et à mesure de l'avance du treillis et en raison de la grande cadence du coulisseau 22 due à la vitesse de rotation élevée de l'arbre 10.

Les chutes des fils transversaux 32 ne peuvent être coincées dans le mécanisme de refendage. En outre, le décalage entre les deux cisaillements considérés réduit notablement l'effort de coupe à fournir, ainsi que les chocs à l'intérieur du mécanisme.

Le fonctionnement est bien entendu identique pour les autres mécanismes de refendage 9, qui permettent ainsi de refendre le treillis soudé T, ou tout autre produit plat continu, suivant plusieurs bandes transversales juxtaposées, par exemple ici au nombre de cinq.

**Revendications**

1. Machine à refendre des treillis métalliques plats continus (T) soudés à larges mailles, notamment d'armature de béton, en plusieurs bandes juxtaposées dans le sens transversal, du type comprenant un bâti de support (1) sur lequel est monté au moins un mécanisme de refendage (9) comprenant deux parties (13a, 13b) disposées en regard l'une de l'autre de part et d'autre d'un plan (P-P) dans lequel se déplace le produit à couper et comportant deux paires de lames (25a, 30a et 25b, 30b) de coupe orientées suivant la direction de déplacement du produit, perpendiculairement audit plan et décalées l'une par rapport à l'autre suivant ladite direction, les lames de chaque paire étant animées d'un mouvement relatif de rapprochement et d'éloignement sous l'action de moyens d'entraînement (12, 19a) amenant les lames en position de cisaillement, caractérisée en ce qu'elle comprend plusieurs mécanismes de refendage (9) montés réglables les uns par rapport aux autres en coulissant dans un bâti rectiligne, dans le sens transversal du treillis à refendre, chaque paire de lames (25a, 30a et 25b, 30b) de chaque mécanisme (9) comportant une lame fixe (30a, 30b) et une lame mobile (25a, 25b), lesdites lames fixes étant alignées au droit l'une de l'autre tandis que lesdites lames mobiles sont décalées l'une par rapport à l'autre d'une part d'une distance ($d_1$) dans la direction de la coupe et d'autre part d'une distance ($d_2$) suivant la direction (D) de déplacement du treillis à couper, le décalage, ou espacement, des lames (25a, 25b et 30a, 30b) de chaque paire, transversalement à la direction (D) de déplacement du treillis étant égal à la largeur d'une maille de celui-ci.

2. Machine selon la revendication 1, caractérisée en ce que la valeur du décalage (d₁) suivant la direction de coupe △ est de l'ordre de grandeur de l'épaisseur du treillis T à refendre.

3. Machine selon l'une ou l'autre des revendications 1 et 2, caractérisée en ce que les moyens d'entraînement comprennent un coulisseau (22) qui porte une lame de coupe (25a, 25b) et qui est monté coulissant suivant un mouvement de va-et-vient suivant la direction de coupe △ en étant solidaire d'un entraînement excentrique (19a) commandé en rotation par un moteur (12), ce coulisseau (22) présentant des moyens de fixation (24a, 24b) de deux lames de coupe dans des plans parallèles, décalés suivant au moins l'une des deux directions constituées par la direction de coupe △ et la direction des arêtes de coupe (26, 31).

4. Machine selon la revendication 3, caractérisée en ce que les moyens de fixation décalés (24a, 24b) sont constitués par des faces de butée (24a) des lames décalées suivant la direction de coupe △ et par des organes (24b) de fixation transversale des lames sur une nervure centrale (24) du coulisseau (22) décalés suivant la direction des arêtes de coupe (26, 31).

5. Machine selon l'une quelconque des revendications 1 à 4, caractérisée en ce que le coulisseau (22) est monté dans un flasque de guidage (16) et porte une lame de coupe (25a, 25b) et est monté coulissant suivant un mouvement de va-et-vient suivant la direction de coupe △ en étant solidaire d'un entraînement excentrique (19a) commandé en rotation par un moteur (12), le flasque de guidage (16) étant disposé de manière amovible et interchangeable entre deux flasques latéraux (17) de maintien.

6. Machine selon l'une quelconque des revendications 1 à 4, caractérisée en ce que dans le cas où une seule lame (25a, 25b) de chaque paire est mobile et où l'autre lame (30a, 30b) est montée sur une partie fixe du bâti, une entretoise (27) également amovible et interchangeable est disposée entre les deux parties fixes (28) qui portent les lames fixes.

7. Machine selon la revendication 5 lorsqu'elle est dépendante de la revendication 4, caractérisée en ce que le coulisseau (22) et l'entretoise (27) présentent sensiblement la même épaisseur transversale, tandis que les parties fixes porte-lames (28) sont disposées en regard des flasques latéraux de maintien (17), les lames mobiles (25a, 25b) et les lames fixes (30a, 30b) étant montées dans des logements (24a, 29) en retrait, dans le sens transversal, respectivement du coulisseau (22) et des parties fixes porte-lames (28).

**Claims**

1. Machine for slitting continuous welded flat metal large mesh trellises, in particular for concrete reinforcement, in a plurality of strips juxtaposed in a transverse direction, of the type comprising a support frame on which at least one slitting mechanism is mounted comprising two parts 13a, 13b disposed opposite each other, on the one hand, and on the other hand, opposite a plane P-P in which the workpiece to be cut moves, and comprising two pairs of cutting blades 25a, 30a and 25b, 30b, guided according to the direction of the workpiece to be cut, perpendicularly to the said plane and spaced in relation to each other according to the said direction, the blades of each pair being activated by a corresponding bringing together and separating movement by the action of driving means 12, 13a bringing the blades in to a cutting position, characterised in that it comprises a plurality of slitting mechanisms 9 mounted so that they are adjustable in relation to each other by running in a rectilinear frame, in the transverse direction of the trellis to be slit, each pair of blades 25a, 30a and 25b, 30b of each mechanism 9 comprising a fixed blade 30a, 30b, and a movable blade 25a, 25b, the said fixed blades being aligned at right angles to one another whilst the said moving blades are, on the one hand, spaced at a distance $d_1$ from one another in the cutting direction, and on the other hand at a distance $d_2$, according to the direction D of the movement of the trellis to be cut, the space or interval, of the blades 25a, 25b and 30a, 30b of each pair transversely to the direction D of the movement of the trellis being equal to the width of one mesh of the trellis.

2. Machine according to claim 1, characterised in that the spacing value $d_1$ according to the cutting direction △ is approximately the size of the thickness of the trellis T to be slit.

3. Machine according to one or other of claims 1 and 2, characterised in that the drive means comprise à slider 22 on which a cutting blade 25a, 26 is mounted and which is mounted so that it slides according to a to and fro movement according to the cutting direction △ and being integral with an eccentric drive means 19a, controlled in rotation by a motor 12, the slider 22 having fixing means 24a, 24b for two cutting blades in the parallel planes, spaced according to two directions comprising the cutting direction △ and the direction of the cutting edges 26, 31.

4. Machine according to claim 3, characterised in that the spaced fixing means 24a, 24b comprise the abutment faces 24a of the blades spaced according to the cutting direction △ and transverse fixing means for the blades on a central flange 24 of the slider 22 spaced according to the direction of the cutting edges 26, 31.

5. Machine according to one of claims 1 to 4, characterised in that the slider 22 is mounted in a guide support 16 and on which a cutting blade is mounted 25a, 25b and mounted so that it slides according to the to and fro movement according to the cutting direction △ and being integral with an eccentric drive means 19a controlled in rotation by a motor 12, the guide support 16 being disposed so that it is detachable and interchangeable between the two lateral support plates 17.

6. Machine according to one of claims 1 to 4, characterised in that where a single blade 25a, 25b from each pair is movable, and where the other blade is mounted on a fixed part of the frame, a interchangeable is disposed between the two fixed parts 28 on which the fixed blades are mounted.

7. Machine according to claim 5, where it is dependent on claim 4, characterised in that the slider 22 and the cross-piece 27 have substantially the same transverse thickness, whereas the fixed part blade mounts 28 are disposed opposite the lateral support 17, the moving blades 25a, 25b and the fixed blades 30a, 30b being mounted in recessed housings 24a, 29 in a transverse direction, relative to the slider 22 and the fixed parts blade mounts 28.

## Ansprüche

1. Maschine zum Längsteilen von kontinuierlichen flachen geschweißten großmaschigen Metalldrahtgittern (T), insbesondere einer Betonarmierung, in mehrere in Querrichtung nebeneinander liegende Bänder, mit einem Traggestell (1), auf dem mindestens ein Längsteilmechanismus (9) montiert ist, der zwei einander zu beiden Seiten der Ebene (P-P) der Bewegung des zu schneidenden Produktes gegenüberliegende Teile (13a, 13b) enthält und zwei Paar Schneidmesser (35a, 30a und 25b, 30b) aufweist, die senkrecht zu dergenannten Ebene in der Bewegungsrichtung des Produktes ausgerichtet und gegeneinander in der genannten Richtung versetzt sind, wobei die Messer jedes Paares durch Antriebsmittel (12, 13a) in eine relative, die Messer in die Schneidposition bringende Annäherungs- und Entfernungsbewegung versetzbar sind, dadurch gekennzeichnet, daß sie mehrere Längsteilmechanismen (9) aufweist, die unter Verschiebung in einem geradlinigen Bett in Querrichtung zu dem in Längsrichtung zu teilenden Drahtgitter gegeneinander verstellbar montiert sind, wobei jedes Messerpaar (25a, 30a und 25b, 30b) jedes Mechanismus (9) ein feststehends Messer (30a, 30b) und ein bewegliches Messer (25a, 25b) aufweist, wobei die genannten feststehenden Messer gerade zueinander ausgerichtet sind, während die genannten beweglichen Messer gegeneinander einerseits um einen Abstand ($d_1$) in Schneidrichtung und anderseits um einen Abstand ($d_2$) im Sinne der Bewegungsrichtung (D) des zu schneidenden Drahtgitters versetzt sind, wobei der Versatz oder Abstand der Messer (25a, 25b und 30a, 30b) jedes Paares quer zur Bewegungsrichtung (D) des Drahtgitters gleich der Größe einer Masche desselben ist.

2. Maschine nach Anspruch 1, dadurch gekennzeichnet, daß die Größe des Versetzungswertes ($d_1$) in Schneidrichtung $\triangle$ in Größenordnung der Dicke des in Längsrichtung zu teilenden Drahtgitters T ist.

3. Maschine nach einem der Ansprüche 1 und 2, dadurch gekennzeichnet, daß die Antriebsmittel einen Schlitten (22) aufweisen, der ein Schneidmesser (25a, 25b) trägt und in einer Hin- und Herbewegung in Schneidrichtung $\triangle$ verschiebbar angeordnet ist, wobei er mit einem von einem Motor (12) in Drehung versetzten Exzenterantrieb (19a) fest verbunden ist, welcher Schlitten (22) Mittel (24a, 24b) zur Befestigung von zwei Schneidmessern in parallelen Ebenen unter Versetzung in mindestens einer der beiden aus der Schneidrichtung $\triangle$ und der Richtung der Schneidkanten (26, 31) bestehenden Richtungen aufweist.

4. Maschine nach Anspruch 3, dadurch gekennzeichnet, daß die versetzten Befestigungsmittel (24a, 24b) aus Anschlagflächen (24a) für die in Schneidrichtung $\triangle$ versetzten Messer und aus in Richtung der Schneidkanten (26, 31) versetzten Organen (24b) zur Querbefestigung der Messer an einer zentralen Rippe (24) des Schlittens (22) gebildet sind.

5. Maschine nach einem der Ansprüche 1 bis 4, dadurch gekennzeichnet, daß der Schlitten (22) in einem Führungsflansch (16) befestigt ist und ein Schneidmesser (25a, 25b) trägt und weiters in einer Hin- und Herbewegung in Schneidrichtung $\triangle$ verschiebbar angeordnet ist, wobei er mit einem von einem Motor (12) in Drehung versetzten Exzenterantrieb (19a) fest verbunden ist, wobei der Führungsflansch (16) abnehmbar und auswechselbar zwischen zwei seitlichen Halteflanschen (17) angeordnet ist.

6. Maschine nach einem der Ansprüche 1 bis 4, dadurch gekennzeichnet, daß, wenn ein einziges Messer (25a, 25b) jedes Paares beweglich und das andere Messer (30a, 30b) auf einem festen Teil des Gestelles angeordnet ist, eine gleichfalls abnehmbare und auswechselbare Querstrebe (27) zwischen den beiden festen, die festen Messer tragenden Teilen (28) vorgesehen ist.

7. Maschine nach Anspruch 5, wenn er auf Anspruch 4 rückbezogen ist, dadurch gekennzeichnet, daß der Schlitten (22) und die Querstrebe (27) in Querrichtung im wesentlichen die gleiche Dicke aufweisen, während die festen Messertrag-Teile (28) gegenüber den seitlichen Halteflanschen (17) angeordnet sind, wobei die beweglichen Messer (25a, 25b) und die festen Messer (30a, 30b) in Querrichtung vertieften Sitzen (24a, 29) des Schlittens (22) bzw. der festen die Messertrag-Teile (28) angeordnet sind.

FIG.1

FIG.2

**0 071 537**

FIG.3

0 071 537

FIG.4